# EUROPÄISCHE PATENTANMELDUNG

(11) **EP 0 911 112 A1**
(43) Veröffentlichungstag der Anmeldung: **28.04.1999**
(21) Anmeldenummer: 98118859.2
(22) Anmeldetag: 06.10.1998
(51) Int. Cl.: B23K 37/04, B25B 5/06, B23Q 3/08

(54) **Druckmittelbetätigbare kombinierte Zentrier- und Spannvorrichtung, insbesondere zur Verwendung im Karrosseriebau der Kfz-Industrie**

(30) Priorität: 21.10.1997 DE 29718643 U
(71) Anmelder: TÜNKERS MASCHINENBAU GmbH, D-40880 Ratingen (DE)
(72) Erfinder: Tünkers, Josef-Gerhard, 40878 Ratingen (DE)
(74) Vertreter: Beyer, Rudi

(57) **Zusammenfassung**

Die Erfindung betrifft eine druckmittelbetätigbare kombinierte Zentrier- und Spannvorrichtung, insbesondere zur Verwendung im Karosseriebau der Kfz-Industrie, mit der eine großflächige Spannung - über den Umfang des Zentrierteiles gesehen - der Bauteile (61,62) möglich ist. Das Zentrierteil (6) und das Spannteil (42,43) sind abwechselnd in beiden Richtungen - spannend und zentrierend oder lösend - nacheinander durch Druckmitteldruck antreibbar und das Spannteil in und an dem Zentrierteil gelagert ist. Dadurch ergibt sich nicht nur eine günstige Krafteinleitung, sondern eine großflächige, zuverlässige Zentrierung um das Zentrierteil herum, so daß die Bauteile mit hoher Präzision arretiert werden können. Dies ist von besonderem Vorteil im Karosseriebau der Kfz-Industrie.

## Beschreibung

Die Erfindung betrifft eine druckmittelbetätigbare kombinierte Zentrier- und Spannvorrichtung.

Vielfach müssen Blechteile an Karosseriegruppen angeschweißt werden. Hierzu ist es wünschenswert, daß zum Beispiel Kniehebelspannvorrichtungen durch Öffnungen von Karosserieteilen hindurchgreifen und die miteinander durch Punktschweißen oder dergleichen zu verbindenden Teile festspannen und bis zu ihrer Fixierung auch in der vorbestimmten Lage zentrieren.

Durch die DE 39 36 396 C1 ist eine druckmittelbetätigbare Kniehebelspannvorrichtung, insbesondere für Karosserieteile, vorbekannt, bestehend aus
1.1 einem ein- oder mehrteiligen Gehäuse mit einem Zylinderraum für den Kolben und einem Bewegungsraum für die Kolbenstange und die Kniehebelgelenkanordnung;
1.2 Führungsmitteln am freien Kolbenstangenende für die Kolbenstange, die im Gehäuse und an einem Kolbenstangenbolzen angeordnet sind;
1.3 einer Lasche, die auf dem Kolbenstangenbolzen und auf einer Kniehebelgelenkachse schwenkbar gelagert ist;
1.4 einem zweiarmigen Hebel, dessen Antriebsende gleichfalls auf der Kniehebelgelenkachse gelagert ist;
   wobei
1.5 der zweiarmige Hebel ein aus einem Winkelhebel bestehende Schwinge bildet, deren Scheitel schwenkbar im Gehäuse (gehäusefeste Schwenkachse) gelagert ist und dessen abtriebsseitiges Ende über eine Schwenkachse mit einem Spannglied gekoppelt ist;
1.6 eine einarmige Schwinge von gleicher Länge wie der abtriebsseitige Hebelarm der zweiarmigen Schwinge schwenkbar im Gehäuse (Schwenkachse) gelagert ist sowie parallel zum abtriebsseitigen Hebelarm des Winkelhebels verläuft und über eine Schwenkachse mit dem Spannglied gekoppelt ist, wobei in der Spannstellung die gehäusefesten Schwenkachsen und die Kniehebelgelenkachse am antriebsseitigen Ende des Winkelhebels auf einer gedachten Geraden liegen, die parallel zur Längsachse der Kolbenstange verläuft.

Diese Spannvorrichtung ist als Unterbauspanner ausgebildet, deren Spannglied am spannseitigen Ende einen Spannhaken aufweist, der durch eine Öffnung der Werkstückauflagefläche hindurchgreift und mit seiner Aufspannfläche der Spannvorrichtung zugewandt ist. Ein am Gehäuse befestigter, einen Hohlraum bildender Zentrierdorn ist vorgesehen, der den Spannhaken in der entspannten Stellung umschließt und in der Spannstellung radial heraustreten läßt.

Durch die DE 39 38 208 ist eine weitere druckmittelbetätigbare Kniehebelspannvorrichtung, insbesondere für Karosserieteile, vorbekannt, bestehend aus
1.1 einem ein- oder mehrteiligen Gehäuse mit einem Zylinderraum für den Kolben und einem Bewegungsraum für die Kolbenstange und die Kniehebelgelenkanordnung,
1.2 Führungsmitteln am freien Kolbenstangenende für die Kolbenstange, die in Führungsnuten des Gehäuses geführt sind und einem Kolbenstangenbolzen,
1.3 einer Lasche, die auf dem Kolbenstangenbolzen und auf einer Kniehebelgelenkachse schwenkbar gelagert ist;
1.4 einem zweiarmigen Spannhebel, dessen Antriebsende gleichfalls auf der Kniehebelgelenkachse gelagert ist und dessen freies Ende als Spannteil (Spannhaken) dient,
1.5 einem am Gehäuse abgestützten und in den Spannhebel eingreifenden Schwenkbolzen
   wobei
1.6 der Schwenkbolzen in einem Kulissenschlitz des Gehäuses geführt ist;
1.7 eine schwenkbar im Gehäuse gelagerte Schwinge mit ihrem anderen Schwingenende gleichfalls auf der Kniehebelgelenkachse gelagert ist.

Einem Schwenkbolzen ist mindestens eine Rolle zugeordnet, mit der der Schwenkbolzen in einem Kulissenschlitz geführt ist, wobei der Kulissenschlitz unter einem spitzen Winkel die Längsachse der Kolbenstange schneidet. Eine Lasche der Kniehebelgelenkanordnung ist über eine parallel zum Kolbenstangenbolzen verlaufende ortsunbewegliche Kniehebelgelenkachse mit einer Schwinge um eine gehäusefeste Achse schwenkbeweglich verbunden, deren Schwenklängsachse parallel zum Kolbenstangenbolzen und zur Kniehebelgelenkachse verläuft.

Der Erfindung liegt die Aufgabe zugrunde, eine druckmittelbetätigbare kombinierte Zentrier- und Spannvorrichtung, insbesondere zur Verwendung im Karosseriebau der Kfz-Industrie, zu schaffen, mit der solche Bauteile, zum Beispiel Bleche aus dem Karosseriebau, nicht nur zuverlässig gegeneinander zentriert, sondern auch mit der erforderlichen hohen Anpreßkraft auf möglichst großer Fläche, die sich um den Zentrierbolzen verteilt, gehalten werden können.

Die Aufgabe wird durch die in **Patentanspruch 1** wiedergegebenen Merkmale gelöst.

Bei der Erfindung ist das Spannteil unmittelbar in und an dem Zentrierteil angeordnet. Dadurch ergibt sich eine raumsparende Konstruktion.

Ein weiterer Vorteil besteht darin, daß durch die Anordnung des Spannteils in und an dem Zentrierteil nur durch eine Hubbewegung des Zentrierteils in die dafür vorgesehenen Öffnungen der zu zentrierenden Bleche das Spannteil aus dem Zentrierteil ausgefahren werden kann.

Ein besonderer Vorteil besteht indessen darin, daß durch die besondere Ausbildung der erfindungsgemäßen druckmittelbetätigten kombinierten Zentrier- und Spannvorrichtung man es in der Hand hat, nicht nur - wie beim Stand der Technik - einseitig, sondern mehrseitig zu spannen, da die erfindungsgemäße Lösung es ermöglicht, das Spannteil mehrteilig auszubilden, um es gleichsinnig und synchron beim Spannen aus dem Zentrierteil heraustreten zu lassen, so daß die zu zentrierenden und zu spannenden Bauteile über den Umfang des Zentrierteils großflächig gespannt werden können. Dadurch ergibt sich nicht nur eine günstige Krafteinleitung, sondern eine großflächige, zuverlässige Zentrierung um das Zentrierteil herum, so daß die Bauteile mit hoher Präzision arretiert werden können. Dies ist von besonderem Vorteil im Karosseriebau der Kfz-Industrie.

Zentrier- und Spannteil werden außerdem sowohl beim Spannen wie auch beim Lösen druckmittelangetrieben, zum Beispiel durch Druckluft. Im Bedarfsfalle kann jedoch auch ein hydraulisches Medium zum Einsatz kommen, obwohl insbesondere im Karosseriebau der Kfz-Industrie bevorzugt Druckluft zur Anwendung kommt, die auch für die in der Regel eingesetzten Kniehebelspannvorrichtungen im Betrieb zur Verfügung steht.

In **Patentanspruch 2** ist eine vorteilhafte Ausführungsform beschrieben, bei welcher dem bolzenförmigen Zentrierteil und dem Spannteil je ein druckmittelangetriebener Zylinder zugeordnet sind, wobei die beiden Zylinder koaxial hintereinander angeordnet werden können. Dadurch ergibt sich eine besonders kompakte Bauform.

Vorteilhafterweise sind der Bewegungszylinder und der Spannzylinder einstückig miteinander verbunden. Dadurch ergeben sich wenig lose Teile. Außerdem trägt diese Bauweise zu einer weiteren Verkleinerung der äußeren Bauabmessungen bei (**Patentanspruch 3**).

Eine besonders vorteilhafte Ausführungsform ist in **Patentanspruch 4** beschrieben. Hierbei kann das Spannteil zwei Doppelhebel aufweisen, die auf diametral gegenüberliegenden Seiten des Zentrierteiles auf die zu spannenden und zu haltenden flächigen Bauteile einwirken können.

Eine besonders vorteilhafte Ausführungsform ist in **Patentanspruch 5** beschrieben. Bei dieser Ausführungsform besteht das Spannteil aus zwei hakenförmigen Doppelhebeln, die auf einer gemeinsamen zentrischen Achse im und am Zentrierteil gelagert sind. Diese hakenförmigen Spannhebel treten beim Spannvorgang aus der Kontur des bolzenförmigen, am freien Ende in der Regel abgerundeten oder verjüngten Spannteils, heraus, können aber beim Entspannen auch wiederum in die Kontur, vornehmlich eine längliche Ausnehmung im Spannteil, einschwenken, woraufhin sich dann die Spann- und Zentriervorrichtung wieder einfahren läßt, damit die zu spannenden und zu zentrierenden Bauteile entfernt werden können. Vorteilhafterweise sind die hakenförmigen Doppelhebel scherenförmig durch Schwenkachsen miteinander verbunden und sind durch weitere Schwenkachsen über Hebel mit einer zentrischen Kupplungsachse gekuppelt, die mit einer Kolbenstange verbunden ist. Die Kolbenstange wird durch einen Spannzylinder angetrieben, der abwechselnd beidseitig durch Druckmitteldruck zu beaufschlagen ist.

In **Patentanspruch 6** ist eine weitere vorteilhafte Ausführungsform beschrieben.

Auch **Patentanspruch 7** beschreibt eine konstruktiv einfache Konstruktion.

In **Patentanspruch 8** ist eine Vorrichtung beschrieben, bei der der Spannkolben den Kolbenkörper des Bewegungszylinders über eine Schleppkupplung in Öffnungsstellung mitnimmt.

Dies geschieht gemäß **Patentanspruch 9** allerdings erst dann, wenn der Spannkolben die Spannvorrichtung vollständig in die Kontur des Zentrierteils zurückbewegt hat. Solange wird durch Anstehen von Druckmitteldruck im Bewegungszylinder dieser verriegelt gehalten. Wenn die Spannvorrichtung vollständig in die Kontur des Zentrierteils eingefahren ist, wird die Schleppverbindung zwischen Spannkolben und Kolbenkörper hergestellt, so daß das Zentrierteil über den Spannzylinder in seine Lösestellung gefahren wird, wobei sich die vollkommen in die äußere Kontur des bolzenförmigen Spannteils hineinbewegten Spannhebel zusammen mit dem Zentrierteil in den Bewegungszylinder zurückbewegt werden. Dieser Bewegungsablauf kann durch eine Folgesteuerung gesteuert werden.

**Patentanspruch 10** beschreibt eine konstruktiv vorteilhafte Ausführungsform der Erfindung.

Bei einer besonders vorteilhaften Ausführungsform der Erfindung ist das bolzenförmige Zentrierteil auf dem übrigen Teil seiner Länge von einem Langloch durchsetzt, das zum Inneren, den Bewegungszylinder zugekehrten Endabschnitt in diesen offen ausmündet und an dazu 90 Grad versetzten Seiten ebenfalls. Auf diese Weise lassen sich die Hebel des Spannteils in dem Langloch anordnen (**Patentanspruch 11**).

Bevorzugt sind die Spannhebel gemäß **Patentanspruch 12** als flache, aufeinanderliegende Bauteile ausgebildet. Dadurch braucht einerseits das bolzenförmige Teil nicht so sehr durch das Langloch geschwächt zu werden, andererseits wird indessen ermöglicht, das auch bei relativ flachen Hebeln diese durch Ausschwenken auf gegenüberliegenden Seiten mit großer Kraft auf die zu haltenden Bauteile ausgefahren werden können, da die Beanspruchung nicht orthogonal zu ihrer Oberfläche, sondern in Richtung des großen Widerstands- und Trägheitsmomentes der Spannhebel auf diese einwirken, so daß große Kräfte übertragbar sind.

In **Patentanspruch 13** ist eine weitere vorteilhafte Ausführungsform beschrieben, was auch für **Patentanspruch 14** gilt.

Wird eine Ausführungsform nach **Patentanspruch 15** gewählt, so läßt sich das Zentrierteil materialmäßig einstückig mit dem Kolbenkörper verbinden, was zur Verringerung von Einzelteilen beiträgt.

Eine kompakte Ausführungsform ist in **Patentanspruch 16** beschrieben.

Besonders ist es, wenn eine Ausführungsform nach **Patentanspruch 17** gewählt wird. Bei dieser ist die Kupplungsachse verdrehsicher in Längsschlitzen geführt, während andererseits Schwenkachsen und auch die Enden von Heben in Erweiterungen des Bewegungszylinders eintreten können. Hierfür beschreibt **Patentanspruch 18** eine besonders vorteilhafte Ausführungsform.

In **Patentanspruch 19** ist eine Ausführungsform beschrieben, die mit nur einem Spannhaken arbeitet. Die Reaktionskräfte werden durch die Rollenführung in dem Gehäuse aufgenommen.

In der Zeichnung ist die Erfindung - teils schematisch - beispielsweise veranschaulicht. Es zeigen:
- Fig. 1: eine erfindungsgemäße druckmittelbetätigbare, kombinierte Zentrier- und Spannvorrichtung im Axiallängsschnitt, teils in der Ansicht, in gelöster Stellung, also in Null-Lage der Zentrier- und Spannvorrichtung;
- Fig. 2: die aus Fig. 1 ersichtliche Vorrichtung nach dem Ausfahren des Zentrierteils;
- Fig. 3: die aus den Fig. 1 und 2 ersichtliche Vorrichtung nach dem Ausfahren des Spannteils, in einem Längsschnitt nach der Linie III - III der Fig. 2;

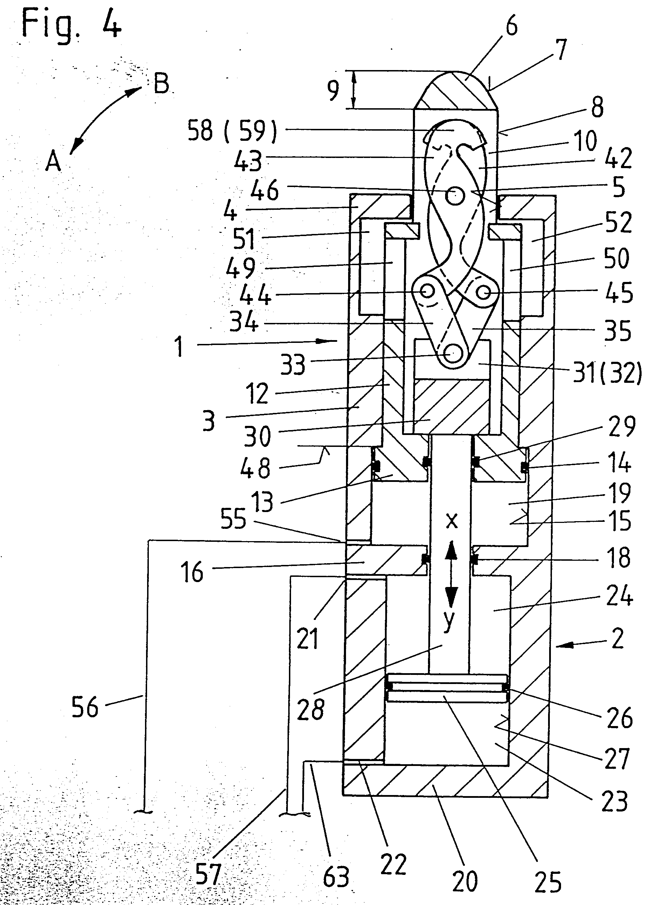

- Fig. 4: die aus den Fig. 1 bis 3 ersichtliche Vorrichtung beim Einfahren der Spann- und Zentriervorrichtung, teils als Schaltplan und
- Fig. 5: einen um 90 Grad versetzt zu Fig. 1 durch die Vorrichtung geführten Axiallängsschnitt;
- Fig. 6: eine weitere Ausführungsform der Erfindung, gleichfalls im Längsschnitt, teils abgebrochen dargestellt.

In der Zeichnung ist die druckmittelbetätigbare kombinierte Zentrier- und Spannvorrichtung an einer Ausführungsform veranschaulicht, wie sie mit besonderem Vorteil im Karosseriebau der Kfz-Industrie zum Einsatz kommt.

Die erfindungsgemäße Vorrichtung besteht im wesentlichen aus zwei koaxial und damit hintereinander angeordneten Zylindereinheiten, von denen die eine als Bewegungszylinder 1 und die andere als Spannzylinder 2 ausgebildet ist. Vorliegend sind die beiden Zylinder 1, 2 einstückig ausgebildet, sie können aber auch aus trennbaren und nur funktionell miteinander, z. B. durch Schrauben verbindbare und demgemäß voneinander lösbare Zylinder bestehen.

Der Bewegungszylinder 1 setzt sich aus einem äußeren Zylinder 3 mit stirnseitigem Zylinderdeckel 4 zusammen, der durch mehrere Schrauben gehalten ist. Die Schrauben sind in mit Gewinde versehene Sackbohrungen des Zylinders 3 eingeschraubt und über den Umfang des Zylinders 3 gleichmäßig verteilt angeordnet. Im übrigen sind die Schrauben in vertieften Senkbohrungen des Zylinderdeckels 4 angeordnet, so daß die Schraubenköpfe versenkt angeordnet sind.

Der Zylinderdeckel 4 besitzt eine zentrische Öffnung 5 zum Durchtritt eines bolzenförmigen Zentrierteils 6, das an seinem freien Endabschnitt an seiner äußeren Mantelfläche 7 abgerundet oder konisch verlaufend ausgebildet ist, um es besser in nicht dargestellte Ausnehmungen von flächigen Bauteilen, zum Beispiel Blechen von Karosserien hineinbewegen zu können. Auf seinem sich an dem konischen oder abgerundet verlaufenden Endabschnitt anschließenden Längenabschnitt 8 ist das Zentrierteil 6 im wesentlichen als Hohlbolzen ausgebildet, besitzt also ein sich an den stirnseitigen Längenabschnitt 9 im Innern des bolzenförmigen Zentrierteils 6 erstreckendes schlitzförmiges Langloch 10, das das Zentrierteil 6 quer und auf seiner gesamten Restlänge nach unten durchsetzt.

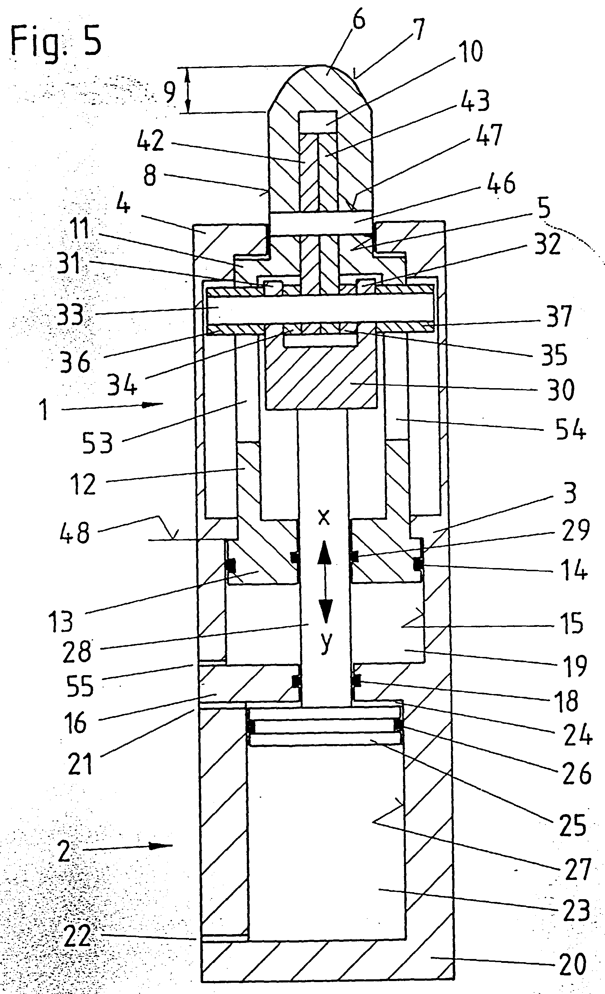

Wie man aus Fig. 5 erkennt, ist das Zentrierteil 6 über einen einstückigen Flansch 11 mit einem zylindrischen Kolbenkörper 12 verbunden, der am Ende einstückig mit einem Bewegungskolben 13 verbunden ist, der über eine Dichtung 14 längsverschieblich und dichtend an der Zylinderinnenwand 15 des äußeren Zylinders 3 geführt ist. Der Flansch 11 bildet einen Teil des Kolbenkörpers 12.

An dem dem Zylinderdeckel 4 entgegengesetzten Endabschnitt ist der Bewegungszylinder 1 durch einen Enddeckel 16 verschlossen, der vorliegend einstückig ausgebildet, aber auch als getrenntes Bauteil durch Dichtungen druckmitteldicht in dem Bewegungszylinder 1 abgedichtet sein kann. Der Enddeckel 16 ist dann mit einer Ringschulter an der Stirnseite des Zylinders 3 abgestützt und greift mit seinem übrigen Längenabschnitt in einen Zylinderraum 19 hinein und ist in diesem Bereich durch die Dichtung druckmitteldicht abgedichtet, während eine andere Dichtung sich gegen die Stirnseite des Zylinders 3 druckmitteldicht anlegt.

Außerdem kann der Enddeckel 16 durch einen Ringflansch des Spannzylinders 2 mittels einer eingedrehten Ringschulter gehalten werden, so daß der Enddeckel 16 achsial und radial formschlüssig arretiert ist. Die Dichtung ist in einer Ringnut des Ringflansches angeordnet.

An dem dem Enddeckel 16 entgegengesetzten Endabschnitt des Spannzylinders 2 ist ein Enddeckel 20 druckmitteldicht angeordnet. Dieser Enddeckel 20 kann auch als lösbares, durch Schrauben gehaltenes Bauteil mit dem Zylinderkörper des Spannzylinders 2 verbunden sein.

Bei 21 und 22 münden Anschlußkanäle zum Zuführen von Druckmittel endseitig in Zylinderräume 23 bzw. 24 ein, die durch einen Spannkolben 25 mit wechselnder Größe begrenzt werden, der durch mindestens ein Dichtungselement 26 längsverschieblich und dichtend an der Zylinderinnenwand 27 des Spannzylinders 2 geführt ist.

Der Spannkolben 25 weist z. B. eine zentrische mit Gewinde versehene Bohrung auf, in der ein mit Gewinde versehener Endabschnitt einer Kolbenstange 28 befestigt ist, die über eine Dichtung 29 abgedichtet den Enddeckel 16 längsverschieblich durchgreift. Der Enddeckel 16 kann auch als getrenntes Bauteil mit dem Zylinder 3 des Bewegungszylinders 1 ausgeführt und mit diesem durch Schrauben, Einklemmen oder dergleichen verbunden sein. Mit 18 ist eine Dichtung bezeichnet.

Die Kolbenstange 28 ist an ihrem anderen Ende mit einer Kupplung 30, beispielsweise durch Gewinde oder dergleichen, gekuppelt. Diese Kupplung 30 ist als Lagergabel mit materialmäßig einstückigen Lagerflanschen 31 und 32 versehen, die in dem aus Fig. 5 ersichtlichen Längsschnitt zusammen mit dem sie verbindenden Steg eine U-förmige Form bilden. Die Lagerflansche 31 und 32 weisen koaxial zueinander angeordnete Bohrungen auf, durch die eine Kupplungsachse 33 hindurchgreift, auf deren mittleren Längenabschnitt zwei laschenförmige Hebel 34 und 35 schwenkbeweglich sowie parallel zueinander verschwenkbar angeordnet sind. Zu diesem Zweck weisen die laschenförmigen Hebel 34 und 35 sie jeweils durchdringende Durchgangsbohrungen auf, durch die die Kupplungsachse 33 hindurchgreift. Die Kupplungsachse 33 ist im übrigen an ihren Endabschnitten über Hülsen 36, 37, die sich mit ihren Stirnseiten an je einer der Lagerflansche 31 bzw. 32 abstützen, durch geeignete Arretierungen, zum Beispiel durch Seegerringe, axial unverschieblich arretiert.

Die Enden jedes laschenförmigen Hebels 34, 35 weisen je eine Bohrung 38 bzw. 39 auf, deren Mittelpunkt jeweils auf einer Mittellinie 40 bzw. 41 angeordnet ist, die ebenfalls geradlinig durch den Mittelpunkt der Kupplungsachse 33 hindurchläuft. Jede der Bohrungen 38 bzw. 39 ist koaxial zu einer weiteren Bohrung (nicht besonders bezeichnet) angeordnet, die am unteren Endbereich (in der Zeichnungsebene gesehen) von je einem Spannhaken 42 bzw. 43 angeordnet ist. Durch die Bohrung 38 bzw. 39 und die jeweils damit korrespondierende Bohrung des betreffenden Spannhakens 42 bzw. 43 greift jeweils eine Schwenkachse 44 bzw. 45. Die Schwenkachsen 44 bzw. 45 verlaufen mit ihren Längsachsen parallel zur Längsachse der Kupplungsachse 33, so daß auch die Spannhaken 42 und 43 parallel zur Ebene wie die laschenförmigen Hebel 34 bzw. 35, also in Richtung A bzw. B, schwenken.

Die Spannhaken 42 und 43 bilden das Spannteil der Vorrichtung.

Etwa im mittleren Längenbereich der Spannhaken 42 bzw. 43 sind die als Doppelhebel ausgebildeten Spannhaken 42 und 43 durch eine Lagerachse 46 schwenkbeweglich miteinander gekuppelt, die in einer Bohrung 47 des Zentrierteils 6, und zwar in den Wandungen des hülsenförmigen Abschnittes des Zentrierteils 6, gelagert ist (Fig. 5). Die Längsachse der Lagerachse 46 verläuft ebenfalls parallel zur Kupplungsachse 33 und damit auch parallel zu den Längsachsen der Schwenkachsen 44 und 45.

In die zentrische Öffnung 5 des stirnseitigen Zylinderdeckels 4 kann ein Flansch mit einem Ringkragen eingreifen, der vor den Mündungsöffnungen der Bohrung 47 angeordnet ist. Der Flansch wird durch mehrere über seinen Umfang verteilte Schrauben gehalten.

Der Kolbenkörper 12 des Bewegungszylinders 1 kann an seinem dem Spannhaken 42, 43 abgekehrten Endabschnitt durch einen Deckel verschlossen ausgebildet sein, der als separates Teil in den Kolbenkörper 12 stirnseitig eingeschraubt und durch eine Dichtung abgedichtet ist, während er bei der Ausführungsform aus der Zeichnung materialmäßig einstückig mit dem Kolbenkörper 12 ausgebildet ist.

Der Deckel kann von der Kolbenstange 28 durch eine Dichtung druckmitteldicht durchgriffen sein. Bei einer Ausführungsform kann die Kupplung 30 über Gewinde mit der Kolbenstange 28 verbunden sein, während sie bei der Ausführungsform nach der Zeichnung einstückig mit der Kolbenstange 28 ausgebildet ist.

Bei 48 ist eine ringförmige Anschlagschulter im Zylinder 3 angeordnet. Die Anschlagschulter 48 kann aber auch an einer Anschlaghülse angeordnet sein, die an der Innenwand des äußeren Zylinders 3 befestigt ist.

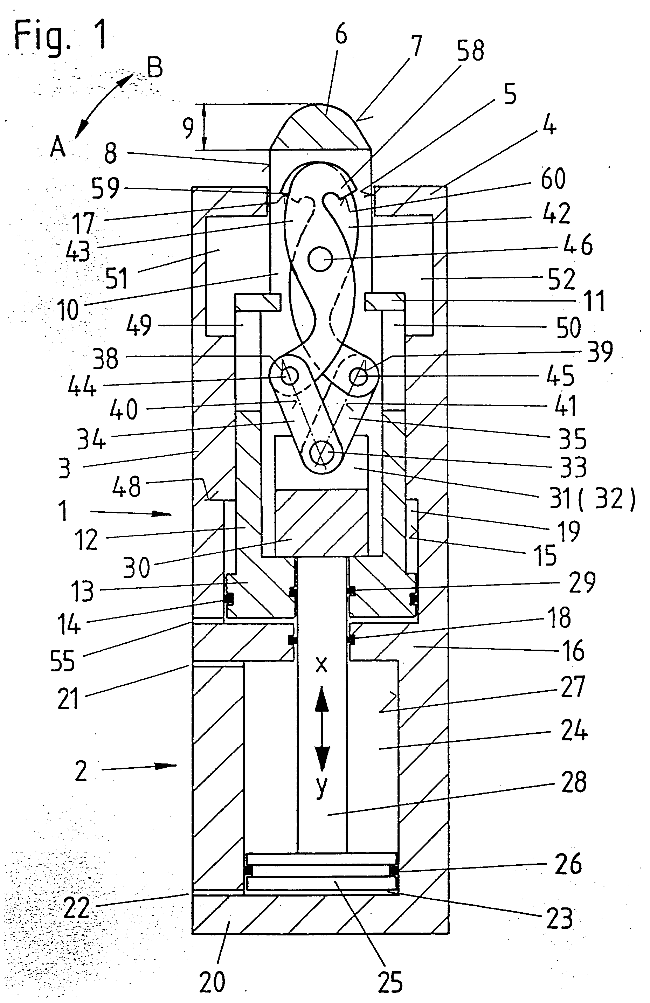

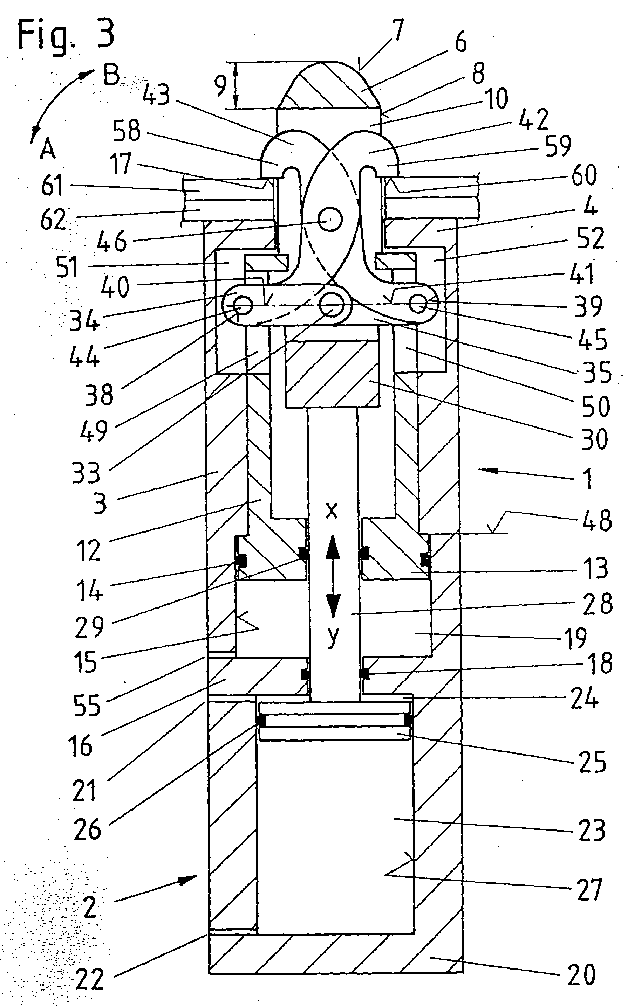

Deutlich erkennt man aus den Fig. 1 bis 3, daß der Kolbenkörper 12 an seinem den Spannhaken 42, 43 zugekehrten Endabschnitt auf diametral gegenüberliegenden Seiten mit Aussparungen 49 bzw. 50 versehen ist, durch die sowohl endseitige Abschnitte der Spannhaken 42 und 43, als auch die Schwenkachsen 44 und 45 zusammen mit Endabschnitten der laschenförmigen Hebel 34 und 35 in je eine Erweiterung 51 bzw. 52 des Bewegungszylinders 1 hineinzutreten vermögen (Spannstellung gemäß Fig. 3).

Wie man aus Fig. 5 erkennt, sind die Enden der Kupplungsachse 33 mit den Hülsen 36 und 37, die als Rollen ausgebildet sein können, in korrespondierenden Längsschlitzen 53, 54 des Kolbenkörpers 12 und des ihn umgebenden äußeren Zylinders 3 in Längsachsrichtung verdrehsicher geführt.

Mit 55 ist ein ggf. mit Gewinde versehener Anschlußkanal bezeichnet.

Die Bezugszeichen 56 und 57 bezeichnen Druckmittelleitungen, die über eine Steuereinheit, zum Beispiel Mehrwegeventile, an eine Druckmittelzufuhrleitung angeschlossen sind, die durch eine motorisch angetriebene Pumpe oder dergleichen mit Druckmitteldruck (hydraulisch oder pneumatisch) zu versorgen ist.

Deutlich ist aus Fig. 3 zu erkennen, daß die beiden Spannhaken 42 und 43 an ihren einander zugekehrten Seitenwänden nach einem Kreisbogen verlaufend ausgebildet sind, während ihre voneinander abgekehrten Rücken nach mehreren Kreisbögen und Kurven abgerundet ausgebildet sind. Spannköpfe 58 bzw. 59 sind hakenförmig mit nach unten gerichteten Spannklauen 17 bzw. 60 versehen, die unmittelbar auf die flächigen Bauteile 61 bzw. 62 einwirken und diese auf der Oberseite einer Auflagematrize fest einspannen und halten.

Wie man erkennt, treten hierbei die Spannhaken 42 und 43 mit ihren Spannklauen 17 und 60 aus dem Zentrierteil 6 hervor.

Außerdem ist zu erkennen, daß der Bewegungszylinder 1 und der Spannzylinder 2 baulich, körperlich einstückig und koaxial zueinander angeordnet sind, so daß sich eine sehr kompakte Bauform ergibt.

Die Wirkungsweise der aus der Zeichnung ersichtlichen Ausführungsform ist folgende:

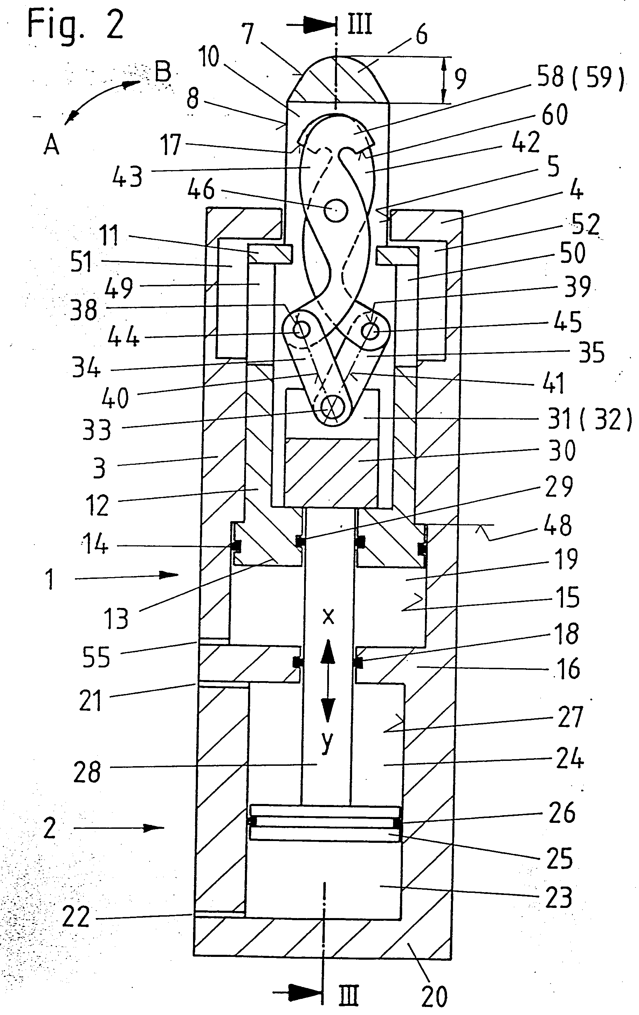

In der Ausgangsstellung gemäß Fig. 1 wird über die betreffende Steuereinheit, die Leitung 56 und der Anschlußkanal 55 der Zylinderraum 19 mit Druckmittel, z. B. Druckluft, beaufschlagt, so daß sich der Kolbenkörper 12 des Bewegungszylinders 2 in Richtung X bewegt. Da das Zentrierteil 6 einstückig mit dem Kolbenkörper 12 verbunden ist, wird es ebenfalls in Richtung X bewegt, also aus der Vorrichtung herausgefahren (Fig. 2) und zentriert dadurch die auf der Vorrichtung angeordneten flächigen Bauteile, zum Beispiel Karosseriebleche 61, 62.

Der Spannzylinder 2 ist hierbei noch nicht betätigt.

Nach Erreichen der Stellung gemäß Fig. 2 wird über die Steuereinheit und die Leitung 63 und den Anschlußkanal 22 der Zylinderraum 23 des Spannzylinders 2 mit Druckmittel beaufschlagt, so daß sich der Spannkolben 25 und mit ihm die Kolbenstange 28 in Richtung X bewegen und über die Kupplung 30 auch die laschenförmigen Hebel 34 und 35 über die Kupplungsachse 33 mitnehmen. Dabei schwenken die laschenförmigen Hebel 34 und 35 um die Kupplungsachse 33 auseinander. Gleichzeitig schwenken die doppelhebelförmigen Spannhaken 42 und 43 aus der Stellung gemäß Fig. 2 allmählich in die Stellung gemäß Fig. 3, also in Spannstellung. Hierbei treten sie aus der äußeren Umgrenzung des bolzenförmigen Zentrierteils 6 in die aus Fig. 3 ersichtliche Lage heraus und spannen die durch das Zentrierteil 6 zentrierten flächigen Bauteile 61, 62 auf diametral einander gegenüberliegenden Seiten, eng an dem Zentrierteil 6 fest gegen die Oberseite des Zylinderdeckels 4 oder eines hier angeordneten Flansches ein. In dieser Position werden sie solange gehalten, solange die Druckmittelbeaufschlagung auf die Unterseite des Spannkolbens 25 erfolgt.

Das Einfahren geschieht durch Beaufschlagung der Ringseite des Spannzylinders, also über die Steuereinheit, die Leitung 57 und den Anschlußkanal 21 sowie den Zylinderraum 24. Dadurch bewegt sich der Spannkolben 25 in Richtung Y und nimmt über Kupplung 30, die Kupplungsachse 33 auch die laschenförmigen Hebel 34 und 35 mit. Die Spannhaken 42 und 43 werden dabei über ihre Schwenkachse 44 und 45 wieder in ihre aus Fig. 1 und 2 ersichtliche Lage bis in das Langloch 10 des Zentrierteils 6 eingeschwenkt. Der Kolbenkörper 12 des Bewegungszylinders 1 wird währenddessen durch Beaufschlagung mittels Druckmittel über den Anschlußkanal 55 gehalten. Während des Einfahrens der Spannhaken 42 und 43 muß nämlich der Kolbenkörper 12 des Bewegungszylinders 2 zunächst in seiner Zentrierstellung verbleiben.

Nachdem der Spannkolben 25 des Spannzylinders 2 durch Bewegung in Richtung Y wieder in seine Null-Lage oder annähernd in seine Null-Lage bewegt wurde, wird die Zylinderseite des Kolbenkörpers 12 für das Zentrierteil 6 druckentlastet und der Kolbenkörper 12 des Bewegungszylinders 2 wird über eine Art Schleppverbindung mittels der Kupplung 30 in Richtung Y bis in seine Ausgangsposition gemäß Fig. 1 durch den Spannkolben 25 bewegt.

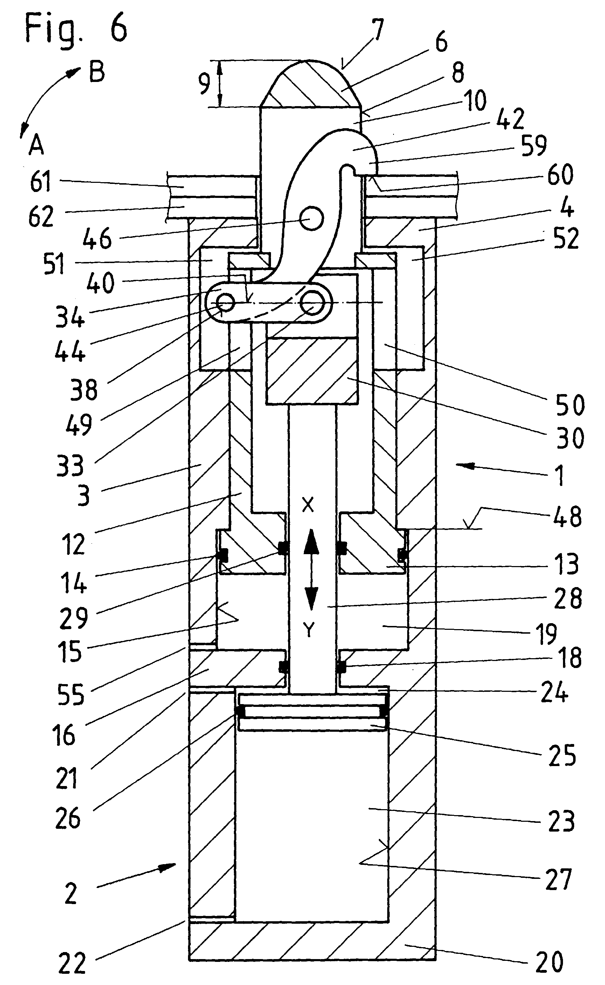

In Fig. 6 ist eine weitere Ausführungsform der Erfindung veranschaulicht, bei der für Teile gleicher Funktion die gleichen Bezugszeichen wie bei den vorbeschriebenen Ausführungsformen verwendet wurden.

Die Ausführungsform nach Fig. 6 unterscheidet sich von den vorbeschriebenen Ausführungsformen dadurch, daß statt zwei nur ein Spannhaken 42 vorgesehen ist. Der Antrieb und die übrige Funktionsweise ist wie es im Zusammenhang mit den vorbeschriebenen Ausführungsformen bereits erörtert wurde. Dies gilt insbesondere auch für die Erweiterung 51, 52 und für die Axialführung durch die Kupplungsachse 33 mit Hülsen bzw. Laufrollen 36, um auch dadurch die Reaktionskräfte aufzunehmen.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Bewegungszylinder
- 2: Spannzylinder
- 3: Zylinder, äußerer
- 4: Zylinderdeckel, stirnseitiger
- 5: Öffnung, zentrische
- 6: Zentrierteil, bolzenförmiges
- 7: Mantelfläche
- 8: Längenabschnitt
- 9: Längenabschnitt, stirnseitiger
- 10: Langloch, schlitzförmiges
- 11: Flansch
- 12: Kolbenkörper des Bewegungszylinders 1, zylindrischer
- 13: Bewegungskolben
- 14: Dichtung
- 15: Zylinderinnenwand
- 16: Enddeckel
- 17: Spannklaue
- 18: Dichtung
- 19: Zylinderraum
- 20: Enddeckel
- 21: Anschlußkanal
- 22: Anschlußkanal
- 23: Zylinderraum
- 24: Zylinderraum
- 25: Spannkolben
- 26: Dichtelement, Dichtung
- 27: Zylinderinnenwand
- 28: Kolbenstange
- 29: Dichtung
- 30: Kupplung
- 31: Lagerflansch
- 32: Lagerflansch
- 33: Kupplungsachse
- 34: Hebel, laschenförmiger
- 35: Hebel, laschenförmiger
- 36: Hülse, Laufrolle
- 37: Hülse, Laufrolle
- 38: Bohrung
- 39: Bohrung
- 40: Mittellinie
- 41: Mittellinie
- 42: Spannhaken, Spannteil, Spannarm, Spannhebel
- 43: Spannhaken, Spannteil, Spannarm, Spannhebel
- 44: Schwenkachse
- 45: Schwenkachse
- 46: Lagerachse
- 47: Bohrung
- 48: Anschlagschulter
- 49: Aussparung
- 50: Aussparung
- 51: Erweiterung
- 52: Erweiterung
- 53: Längsschlitz
- 54: Längsschlitz
- 55: Anschlußkanal
- 56: Druckmittelleitung
- 57: Druckmittelleitung
- 58: Spannkopf
- 59: Spannkopf
- 60: Spannklaue
- 61: Bauteil, flächiges, Blech
- 62: Bauteil, flächiges, Blech
- 63: Leitung
- A: Schwenkrichtung
- B: Schwenkrichtung
- X: Bewegungsrichtung
- Y: Bewegungsrichtung

## Patentansprüche

1. Druckmittelbetätigbare kombinierte Zentrier- und Spannvorrichtung, insbesondere zur Verwendung im Karosseriebau der Kfz-Industrie, mit einem bolzenförmigen Zentrierteil (6) und einem Spannteil (42, 43), wobei das Zentrierteil (6) und das Spannteil (42, 43) abwechselnd in beiden Richtungen - spannend und zentrierend oder lösend - nacheinander durch Druckmitteldruck antreibbar und das Spannteil (42, 43) in und an dem bolzenförmigen Zentrierteil (6) gelagert ist.

2. Druckmittelbetätigbare kombinierte Zentrier- und Spannvorrichtung nach Anspruch 1, **dadurch gekennzeichnet,** daß dem bolzenförmigen Zentrierteil (6) ein druckmittelangetriebener Bewegungszylinder (1) mit Kolbenkörper (12) und dem Spannteil (42, 43) ein Spannzylinder (2) mit Spannkolben (25) zugeordnet ist und daß der Bewegungszylinder (1) und der Spannzylinder (2) koaxial hintereinander angeordnet sind.

3. Druckmittelbetätigbare kombinierte Zentrier- und Spannvorrichtung nach Anspruch 2, **dadurch gekennzeichnet,** daß der Bewegungszylinder (1) und der Spannzylinder (2) materialmäßig oder funktionell einstückig miteinander verbunden sind.

4. Druckmittelbetätigbare kombinierte Zentrier- und Spannvorrichtung nach Anspruch 1 oder einem der darauffolgenden Ansprüche, **dadurch gekennzeichnet,** daß das Spannteil (42, 43) aus zwei Doppelhebeln besteht, die in ihrem mittleren Längenbereich um eine gemeinsame Lagerachse (46) in dem bolzenförmigen Zentrierteil (6) schwenkbeweglich gelagert sind.

5. Druckmittelbetätigbare kombinierte Zentrier- und Spannvorrichtung nach Anspruch 4, **dadurch gekennzeichnet,** daß jeder Doppelhebel des Spannteils (42, 43) an seinem dem freien Ende des bolzenförmigen Zentrierteils (6) abgewandten Ende je eine Bohrung aufweist, durch die je eine Schwenkachse (44, 45) hindurchgreift und daß auf jeder Schwenkachse (44 bzw. 45) je ein laschenförmiger Hebel (34 bzw. 35) gelagert ist und jeder Hebel (34, 35) an seinem anderen Ende jeweils eine Bohrung aufweist, und daß beide laschenförmigen Hebel (34, 35) auf einer gemeinsamen Kupplungsachse (33) schwenkbeweglich gelagert sind, wobei die Kupplungsachse (33) in einer Kupplung (30) gelagert sind, die über eine Kolbenstange (28) antreibbar ist, die mit dem im Spannzylinder (2) längsverschieblich und dichtend geführten Spannkolben (25) verbunden ist.

6. Druckmittelbetätigbare kombinierte Zentrier- und Spannvorrichtung nach Anspruch 5, **dadurch gekennzeichnet,** daß die Kolbenstange (28) des Spannzylinders (2) abgedichtet durch eine Stirnseite eines Kolbenkörpers (12) des Bewegungszylinders (1) in den Kolbenkörper (12) hineinragt und daß der Spannkolben (25) abwechselnd beiderseits über je einen Anschlußkanal (21 bzw. 22) mit Druckmitteldruck gesteuert zu beaufschlagen ist.

7. Druckmittelbetätigbare kombinierte Zentrier- und Spannvorrichtung nach Anspruch 6, **dadurch gekennzeichnet,** daß der Kolbenkörper (12) des Bewegungszylinders (1) mittels eines Bewegungskolbens (13) längsverschieblich und dichtend an einer Zylinderinnenwand (15) des Bewegungszylinders (1) geführt ist, wobei der axiale Verschiebeweg auf der einen Seite durch einen dem Spannzylinder (2) zugekehrten Enddeckel (16) und auf der anderen Seite stirnseitig durch einen gehäusefesten Anschlag des Bewegungszylinders (1) begrenzt ist, wobei unterhalb des Bewegungskolbens (13) ein Anschlußkanal (55) in einen Zylinderraum (19) des Bewegungszylinders (1) einmündet, durch den gesteuert Druckmitteldruck unter den Bewegungskolben (13) zuführbar ist.

8. Druckmittelbetätigbare kombinierte Zentrier- und Spannvorrichtung nach Anspruch 5 oder einem der darauffolgenden Ansprüche, **dadurch gekennzeichnet,** daß der Spannkolben (25) über die Kolbenstange (28) und die Kupplung (30) bei Durchführung eines Öffnungshubes (Y) mit dem Bewegungskolben (13) des Bewegungszylinders (1) - durch eine Schleppverbindung - schleppend kuppelbar ist.

9. Druckmittelbetätigbare kombinierte Zentrier- und Spannvorrichtung nach Anspruch 1 oder einem der darauffolgenden Ansprüche, **dadurch gekennzeichnet,** daß das Zentrierteil (6) über den Bewegungszylinder (1) während des Lösungshubes des Spannzylinders (2) so lange in Zentrierstellung durch Anstehen von Druckmitteldruck unterhalb des Bewegungskolbens (13) verriegelbar ist, bis die Spannvorrichtung (42, 43) vollständig in die Kontur des Zentrierteils (6) eingefahren ist, woraufhin die Schleppverbindung des Spannkolbens (25) mit dem Kolbenkörper (12) herstellbar ist, um das Zentrierteil (6) in Lösestelle zurückzubewegen.

10. Druckmittelbetätigbare kombinierte Zentrier- und Spannvorrichtung nach Anspruch 4 oder einem der darauffolgenden Ansprüche, **dadurch gekennzeichnet,** daß die Spannhebel (42, 43) der Spannvorrichtung auf ihren einander abgekehrten Rücken nach Kurven abgerundet ausgebildet sind, während sie auf ihren einander zugekehrten Seitenwänden nach Kreisbogen verlaufen, und daß die äußeren Enden der Spannhebel (42, 43) mit je einem Spannkopf (58, 59) versehen sind, die an ihren dem zu halternden flachen Bauteil (61, 62) zugekehrten Oberflächenbereichen mit Spannklauen (17, 60) versehen sind.

11. Druckmittelbetätigbare kombinierte Zentrier- und Spannvorrichtung nach Anspruch 4 oder einem der darauffolgenden Ansprüche, **dadurch gekennzeichnet,** daß das bolzenförmige Zentrierteil (6) auf dem überwiegenden Teil seiner Länge von einem Langloch (10) durchsetzt ist, das nach unten und auf gegenüberliegenden Seiten nach außen ausmündet und daß die Spannhebel (42, 43) mit der Lagerachse (46) in diesem Langloch (10) angeordnet sind, derart, daß die Lagerachse (46) in einer Bohrung (47) angeordnet ist.

12. Druckmittelbetätigbare kombinierte Zentrier- und Spannvorrichtung nach Anspruch 4 oder einem der darauffolgenden Ansprüche, **dadurch gekennzeichnet,** daß die Spannhebel (42, 43) als flache aufeinanderliegende Bauteile ausgebildet sind, die an beiden Endabschnitten mit jeweils voneinander weggerichteten Ausformungen versehen sind, wobei die äußeren Enden die Spannklauen (59, 60) aufweisen, die jeweils mit einem Flansch oder dergleichen zusammenwirken, auf denen das betreffende Bauteil (61, 62) aufruht.

13. Druckmittelbetätigbare kombinierte Zentrier- und Spannvorrichtung nach Anspruch 5 oder einem der darauffolgenden Ansprüche, **dadurch gekennzeichnet,** daß die laschenförmigen Hebel (34, 35) in Lösestellung der Vorrichtung mit ihren Längsachsen jeweils einen spitzen Winkel zu der gemeinsamen Längsachse des Bewegungszylinders (1) und des Spannzylinders (2) und damit auch zu der Kolbenstange (28) einschließen.

14. Druckmittelbetätigbare kombinierte Zentrier- und Spannvorrichtung nach Anspruch 6 oder einem der darauffolgenden Ansprüche, **dadurch gekennzeichnet,** daß die Kolbenstange (28) an ihrem der Kupplung (30) zugekehrten Ende mit einem Gewindeabschnitt versehen ist, über das die Kolbenstange (28) mit der Kupplung (30) lösbar gekuppelt ist.

15. Druckmittelbetätigbare kombinierte Zentrier- und Spannvorrichtung nach Anspruch 6 oder einem der darauffolgenden Ansprüche, **dadurch gekennzeichnet,** daß das Zentrierteil (6) materialmäßig einstückig mit dem Kolbenkörper (12) verbunden ist.

16. Druckmittelbetätigbare kombinierte Zentrier- und Spannvorrichtung nach Anspruch 6 oder einem der darauffolgenden Ansprüche, **dadurch gekennzeichnet,** daß das Zentrierteil (6) unmittelbar unterhalb des stirnseitigen Zylinderdeckels (4) einen Flansch (11) aufweist, der von den Spannhebeln (42, 43) durchgriffen ist und unterhalb dessen die Schwenkachsen (44 bzw. 45) für die laschenförmigen Hebel (34, 35) angeordnet sind.

17. Druckmittelbetätigbare kombinierte Zentrier- und Spannvorrichtung nach Anspruch 16, **dadurch gekennzeichnet,** daß unterhalb des Flansches (11) der Kolbenkörper (12) auf diametral gegenüberliegenden Seiten mit sich in axialer Richtung erstreckenden Aussparungen versehen ist, durch die die Spannhebel (42, 43) mit ihren Schwenkachsen (44, 45) beim Schwenkvorgang hindurchtreten, und daß in diesem Bereich auch der Bewegungszylinder (1) auf diametral gegenüberliegenden Seiten mit je einem Längsschlitz (53, 54) versehen ist, in denen die Kupplungsachse (33) hineinragt und geführt ist.

18. Druckmittelbetätigbare kombinierte Zentrier- und Spannvorrichtung nach Anspruch 17, **dadurch gekennzeichnet,** daß die Kupplungsachse in den Längsschlitzen (53, 54) über Hülsen oder Rollen (36, 37) geführt und gelagert ist.

19. Druckmittelbetätigbare kombinierte Zentrier- und Spannvorrichtung nach Anspruch 1 oder einem der darauffolgenden Ansprüche, **dadurch gekennzeichnet,** daß nur ein als Spannhaken ausgebildetes Spannteil (42) vorgesehen ist.
